# EUROPÄISCHE PATENTSCHRIFT

(11) **EP 1 345 839 B1**
(45) Veröffentlichungstag und Bekanntmachung des Hinweises auf die Patenterteilung: **06.04.2005**
(21) Anmeldenummer: 01985403.3
(22) Anmeldetag: 14.12.2001
(51) Int. Cl.: B67C 7/00, B65B 55/10, B65G 35/08

(54) **VORRICHTUNG ZUM STERILEN BEFÜLLEN VON FLASCHENFÖRMIGEN PACKUNGEN**
DEVICE FOR FILLING BOTTLE-SHAPED PACKAGING IN STERILE CONDITIONS
DISPOSITIF DE REMPLISSAGE ASEPTIQUE D'EMBALLAGES EN FORME DE BOUTEILLES

(30) Priorität: 28.12.2000 DE 10065591
(43) Veröffentlichungstag der Anmeldung: 24.09.2003
(73) Patentinhaber: Tetra Laval Holdings & Finance SA, 1009 Pully (CH)
(72) Erfinder: LUDWIG, Werner, 64291 Darmstadt-Wixhausen (DE)
(74) Vertreter: Weber, Dieter, Dr.
(86) Internationale Anmeldenummer: PCT/EP2001/014745
(87) Internationale Veröffentlichungsnummer: WO 2002/053487

(56) Entgegenhaltungen:
- DE-U- 29 923 443
- US-A- 3 783 581
- US-A- 3 859 774
- US-A- 4 014 158

## Beschreibung

Die Erfindung betrifft eine Vorrichtung zum sterilen Befüllen von flaschenförmigen Packungen mit fließfähigen Lebensmitteln, zum Beispiel Getränken, bei welcher eine intermittierend angetriebene Fördereinrichtung in einer Linie in Förderrichtung (1. Laufrichtung) hintereinander angeordnete, durch Bearbeitungsstationen bewegbare Packungsträger aufweist und in einer am Ein- und Austritt mit Packungsdurchtrittsöffnungen und mit wenigstens einem Einlaß für Sterilisiermedium versehenen Hygienekammer angeordnet ist, mit Mitteln zum aneinanderliegenden Bewegen der Packungsträger im Bereich des Obertrums der Fördereinrichtung derart, daß die Packungsträger in einer ersten Prozeßebene ein überwiegend geschlossenes Feld bilden, das unter Bildung eines oberen Raumes im Abstand von der Oberwand der Hygienekammer angeordnet ist, mit einem in der Oberwand der Hygienekammer angebrachten Einlaß für das Sterilisiermedium, Mitteln zum Eindrücken des Sterilisiermediums unter Überdruck in den oberen Raum der Hygienekammer und mit Mitteln zum Führen des Sterilisiermediums im wesentlichen parallel zur Förderrichtung (1. Laufrichtung) der Packungsträger.

Für die Herstellung und insbesondere Fertigstellung von Packungen werden diese bei bekannten Maschinen in Werkstückträgern gehaltert und mittels endlos umlaufenden Förderbändern intermittierend einzelnen Bearbeitungsstationen zugeführt, in welchen die jeweilige Packung zum Beispiel nach dem fertigen Auffalten gefüllt und schließlich verschlossen wird. Die Förderbänder laufen um zwei Umlenkrollen um, wobei die Werkstückträger in deren Förderbogen von einer vertikalen Ausrichtung in eine horizontale und dann wieder in eine vertikale Ausrichtung gedreht werden. Die vertikale Ausrichtung ist die für die Prozeßebene, weil derartige Förderer häufig beim Verpacken flüssiger Lebensmittel eingesetzt werden, die von oben in die darunter stehende oben offene Packung eingefüllt werden. Bei vielen Förderern sind die Werkstückträger starr miteinander verkettet, zum Beispiel über Rollen- oder Gliederketten. Will man solche Förderer in der Lebensmittelbranche einsetzen, ist häufig das sterile Verpacken erforderlich, und bei Rollen- oder Gliederketten müssen bewegliche Teile geschmiert werden, so daß solche Förderer nicht in einem Hygienereinraum arbeiten können, wo aber die Befüllung der Packungen erfolgt.

Um die Maschinenleistung von Packungsmaschinen und dort insbesondere von Füllern zu erhöhen, d.h. pro Zeiteinheit in einer Maschine eine größere Anzahl von Packungen verarbeiten zu können, hat man längs der Prozeßebene mehrere Packungsträger nebeneinander angeordnet, die also quer zu der ersten Laufrichtung nebeneinander angeordnet werden. Sofern Endlosförderer solcher Art für ein Vervielfachen in der Breite überhaupt einsatzfähig sind, ist die Breite einer solchen Prozeßebene aber zumindest aus statischen Gründen Grenzen unterworfen, die eine weitere Leistungssteigerung nicht erlauben.

Bei Endlosförderem nach der WO 00/45 862 A1 werden Packungen intermittierend in einer ersten Laufrichtung (Förderrichtung) in Packungsträgern auf einer ersten Prozeßebene in Positionen unterhalb von verschiedenen Bearbeitungsstationen transportiert, und die Packungsträger werden auf einer zweiten Rücklaufebene in einer zweiten, zu der ersten Laufrichtung parallelen Laufrichtung unter Bildung eines Förderkreislaufes zurückgefördert. Schematisch verläuft der Förderkreislauf nach einer Schleife, wenn man seitlich auf die Förderer blickt. Es gibt offene Verpackungssysteme ohne Hygienekammer mit Maßnahmen zum Sterilisieren des Füllgutes und des Packungsinneren, einschließlich der Flaschenhälse im Falle von flaschenähnlichen Packungen. Es gibt auch geschlossene Fördersysteme, welche Förderer in einem geschlossen Hygieneraum haben.

Bei einigen bekannten Maschinen mit Förderbändern und an diesen gehalterten Werkstückträgern, in welchen die jeweilige Packung unter die Bearbeitungsstationen geführt wird, wirken die Werkstückträger wie Schaufeln, so daß aus der verkeimten Umgebungsluft eingeführte Packungen wenigstens teilweise außen auch mit der verkeimten Luft in einem Reinraum weitergefördert werden, oder auch verkeimte Luft außerhalb und innerhalb der Packung unter die sterilisierte Bearbeitungsstation geführt werden. Mit Nachteil werden also von außerhalb Keime an Positionen gefördert, wo das Luftvolumen eigentlich steril sein soll. Zum Teil hat man diesen Nachteil erkannt und dadurch zu beheben versucht, daß man die teilweise und möglicherweise mit Keimen versehene Luft sogleich wieder absaugt. Mit dieser Luft wird aber auch Sterilisiermedium mit abgesaugt, und das fehlt später beim Sterilisieren. Man könnte dies nur durch Zugabe sehr großer Ströme von Sterilisiermedien kompensieren.

Der Fachmann weiß also nicht, wie er den Eintritt verkeimter Luft bei den bekannten Vorrichtungen vermeiden kann und andererseits die Wachstumsbedingungen in insbesondere geschlossenen Systemen mit Hygienekammern reduzieren soll, damit zum Beispiel eingeschleppte Keime nicht wachsen oder sich weniger stark ausbreiten. Der Fachmann würde sterile Luft oder ein Sterilisiermedium in Form von steriler Luft und Sterilisationsmittel, zum Beispiel H₂O₂, in den Hygieneraum hineinpumpen und fortlaufend in diesem einen Überdruck an diesem Sterilisiermedium gegenüber der Umgebung aufrechterhalten. Mit Nachteil würden aber dadurch nicht nur sehr viel Sterilisationsmedium und auch Energie für die sterile Luft verbraucht, sondern die Umgebung würde auch stark mit Wasserstoffperoxid belastet mit allen gesundheitlichen Gefährdungen.

Bei der dem Oberbegriff des Anspruchs 1 entsprechenden Vorrichtung nach der oben schon erwähnten WO 00/45 862 werden flaschenförmige Pakkungen durch eine längliche, vertikal aufragende Sterilisierungskammer sterilisiert und durch Schwerkraft nach unten in Löcher in Packungsträgern eingesetzt. Diese Packungsträger befinden sich auf einem Endlosgurt, an welchem die Packungsträger in festem Abstand zueinander angebracht sind und zusammen mit dem Gurt um Umlenkrollen unter Bildung des oberen und unteren Trums dieses Förderers geführt werden. Die starr miteinander verketteten und mit dem Gurt verbundenen Packungsträger befinden sich, einschließlich des Förderers, in einem Hygienereinraum. Die Achsen und beweglichen Teile dieses Förderers müssen geschmiert werden und verunreinigen mit Nachteil den Hygienereinraum. In diesen werden an mehreren Stellen größere Mengen an steriler Luft zugeführt, und in den abstromigen Bereichen der Hygienekammer herrscht größerer Überdruck als im aufstromigen Bereich, so daß Gasleckage in die aufstromigen Kammerbereiche strömt. In den abstromigen Bereichen soll die Konzentration der sterilen Luft sogar bewußt niedriger gehalten werden. Mit Nachteil gibt es daher abstromig gute Wachstumsbedingungen für Keime und Sporen, und die Gefahr der Kontamination wächst, wenn nicht große Mengen steriler Luft durch die Hygienekammer strömen.

Aus der EP 0 206 096 ist eine Füllmaschine bekannt, bei der das Austreten von Sterilisiermitteln begrenzt werden soll. Hierfür werden Druckschleusen eingesetzt mit verschiedenen Drosselquerschnitten. Eine Transportkette wird durch die. Druckschleusen hindurchgeführt. Einem zwischen den Schleusen angeordneten Sterilisierraum ist abstromseitig ein Füllraum nachgeschaltet, in den fortlaufend Sterilisiermedium einströmt, welches an der Austrittsseite der gefüllten Packungen in zu großen Mengen austritt.

Aufgabe der Erfindung ist es daher, eine Vorrichtung der eingangs genannten Art zu schaffen, bei welcher eine höhere Konzentration an Sterilisiermedium in der Hygienekammer erhalten wird und die Wachstumsbedingungen für Keime, Bakterien und Sporen in einer Hygienekammer verschlechtert sind und die Voraussetzungen der Kontamination schon in der Hygienekammer trotz Einsatz von geringen Mengen Sterilisationsmittel reduziert sind.

Die Erfindung löst diese Aufgabe mit den im Anspruch 1 angegebenen Merkmalen. Das gesamte Fördersystem gemäß der Erfindung ist also derart ausgestaltet, daß ein Packungsträger am nächsten anliegt und mehrere Packungsträger im Bereich des Obertrums der Fördereinrichtung eine ganze Fläche bzw. ein Feld bilden. Dieses Feld stellt eine Art Wand dar, auch wenn sie Löcher und Spalte hat. Diese Wand bildet die untere Wandung eines "oberen Raumes", der zwischen der Oberwand der Hygienekammer und eben diesem geschlossenen Feld liegt. Dieser obere Raum über dem durch die Packungsträger gebildeten geschlossenen Feld kann vorn und hinten an dem Feld sogar offen sein. Gleichwohl kann man sich den seitlich sowie oben und unten begrenzten oberen Raum im oberen Bereich der Hygienekammer vorstellen. Ist nun in der Oberwand der Hygienekammer, also oberhalb des oberen Raumes, wenigstens ein Einlaß für das Sterilisiermedium angebracht, dann kann man diesen oberen Raum durch den mindestens einen Einlaß je nach Wunsch mit Sterilisiermedium beschicken. Besonders günstig gelingt dies durch Mittel, zum Beispiel Schaufelräder, Gebläse, Pumpen, zum Eindrücken des Sterilisiermediums unter Überdruck in den oberen Raum der Hygienekammer. Tritt zum Beispiel frisches oder hoch konzentriertes Sterilisiermedium durch die Oberwand in den oberen Raum der Hygienekammer ein, dann kann dieser Strom von Sterilisiermedium gerichtet und gegebenenfalls auch durch unterschiedliche Drücke mit unterschiedlichen Geschwindigkeiten eingeleitet werden. Die Packungsträger können so ausgestaltet oder mit derart ausgestalteten Zusätzen versehen sein, daß sie Mittel bilden zum Führen des Sterilisiermediums im wesentlichen parallel zur Förderrichtung (der ersten Laufrichtung) der Packungsträger. Dieser Begriff beinhaltet das Strömen des im allgemeinen gasförmigen oder auch nebelartigen Sterilisiermediums in Förderichtung der Pakkungsträger und entgegen dieser Förderrichtung; in beiden Fällen parallel zur Förderrichtung.

Der obere Raum in der Hygienekammer ist mehr oder weniger geschlossen und an seinem eingangsseitigen wie auch an seinem ausgangsseitigen (jeweils in Förderrichtung gesehen) Ende des geschlossenen Trägerfeldes offen. Insbesondere ist der obere Raum neben den Stirnflächen der Hygienekammer im Bereich der Enden des geschlossenen Trägerfeldes durch Spalte offen. Diese Spalte bieten Mittel zum Herausführen des Sterilisiermediums aus dem oberen Raum in andere Bereiche in der Hygienekammer, in denen der Druck geringer ist, zum Beispiel dort, wo das Sterilisiermedium abgesaugt wird. Zur Vereinfachung der erfindungsgemäßen Vorrichtung treten die zu befüllenden flaschenförmigen Packungen durch Durchtrittsöffnungen in Wandungen der Hygienekammer von außerhalb in die Hygienekammer hinein. Besonders günstig ist es, daß diese Packungsdurchtrittsöffnungen als dynamische Schleusen ausgestaltet sind. Es handelt sich hier nicht um klassische Schleusen mit separaten Räumen, in denen chargenweise unterschiedliche Atmosphären erzeugt werden und die dann zur einen oder anderen Seite hin geöffnet werden, sondern die erfindungsgemäße dynamische Schleuse ist ein Raum neben den Packungsdurchtrittsöffnungen, wo durch den Eintritt der Packungen von außerhalb zusammen mit teilweise verkeimter Luft diese verkeimte Luft abgesaugt wird, durch sterile Luft aus der Hygienekammer ersetzt oder mit dieser vermischt und ebenfalls abgesaugt wird. Es handelt sich im Bereich um die dem Hygieneraum zugeförderten Packungen um einen Raum mit verhältnismäßig lebhaftem Gasaustausch unter fortwährender Absaugung dieser Gase, bis nach einer Mindestzeit die Gase um die Packungen herum im wesentlichen eine solche Konzentration an Sterilisationsmittel haben, wie wenigstens die Räume in der Hygienekammer mit geringer Konzentration. Während oder nach dem Austausch des Packungsinhaltes, d.h. des Ausströmens der noch verunreinigten Luft und Einströmens von sterilen Gasen, verlassen die Packungen die dynamischen Schleusen und gelangen dann in Räume mit einem etwas größeren Abstand von den Gasabsaugeinrichtungen. Die Gasabsaugeinrichtungen in Form von Gebläsen, Schaufelrädern, Pumpen oder dergleichen sind neben den Packungsdurchtrittsöffnungen und zum Teil außerhalb der Hygienekammer angebracht.

Der Vorteil dieser Gasabsaugungen liegt darin, daß einerseits nur geringe Menge Sterilluft dem Kreislauf verloren geht und andererseits gleichzeitig diese sterilen Gase die Umgebungsluft nicht verunreinigen. Es wird mit Vorteil weniger Sterilisationsmittel benötigt, und gleichwohl werden die Wachstumsbedingungen für Keime in der ganzen Hygienekammer reduziert. Die erwähnten Maßnahmen der neuen Vorrichtung erlauben den Eintritt nur geringer Mengen verkeimter Luft in den Hygieneraum. Man kann die Einlässe für das Sterilisiermedium in der Oberwand der Hygienekammer so ausgestalten und betreiben, daß eine große Menge an steriler Luft mit Sterilisationsmittel eingeblasen wird, gleichzeitig durch die Gasabsaugeinrichtungen aber wieder gewonnen wird und dem Kreislauf erhalten bleibt. Die zu befüllenden Packungen müssen vor dem Befüllen in die Hygienekammer eingeführt und danach herausgeführt werden. In beiden Fällen passieren die Pakkungen ihre Durchtrittsöffnungen. Deshalb sind neben den eingangsseitigen und auch den ausgangsseitigen Packungsdurchtrittsöffnungen die Gasabsaugeinrichtungen vorgesehen, zum Beispiel abzugsartige, trichterförmige Saugleitungen, in die zum Teil auch die mit den Packungen eingeschleppte Außenluft abgesaugt wird. Nach dem Verlassen der dynamischen Schleuse stellen nur die Volumina des jeweiligen Flascheninneren die Kontaminationsträger dar, denn von außerhalb wurde verunreinigte Luft abgesaugt. Bei einer gut arbeitenden Maschine befindet sich die flaschenförmige Packung etwa 24 Sekunden lang in direktem Kontakt mit dem Sterilisationsmedium, so daß sich eine starke Reduktion der Keimzahl ergibt.

Es ist bevorzugt, daß die flaschenförmigen Packungen, im folgenden kurz Flaschen genannt, mit ihrer Öffnung nach oben gehaltert und transportiert werden derart, daß die offene Seite der Flasche jeweils der Oberwand mit den Einlässen für das Sterilisiermedium gegenüberliegen. Das im wesentlichen gasförmige Sterilisiermedium wird dann bevorzugt in die Flasche hineingeblasen, so daß der Austausch schon der verkeimten Luft aus dem Flascheninneren schnell vollzogen wird, spätestens aber im Bereich der Behandlungsstationen, wo Sterilisationsmittel eingesprüht und ausgetrocknet wird. Dieses Verfahren und die erfindungsgemäße Vorrichtung lassen sich aber auch bei geschlossenen Flaschen oder anderen Packungen anwenden. Die Keimreduzierung ist umso intensiver, je weniger eine Flasche innen sterilisiert werden muß, wenn Flaschen innen zum Beispiel durch die Herstellung steril sind und geschlossen gehalten werden und nur von außen sterilisiert und dann kurz vor dem Befüllen geöffnet werden. Es ist zweckmäßig, wenn die sterile Luft auf mehr als 70°C erwärmt wird und als Sterilisationsmittel Wasserstoffperoxid (H₂O₂ in Gasform mit einer Temperatur eingesprüht wird, die kurz unter der Kondensationstemperatur liegt. Vorzugsweise sind in der Oberwand der Hygienekammer längs des geschlossenen Feldes zahlreiche Einlässe für das Sterilisiermedium reihenweise hintereinander angeordnet, wobei vorzugsweise der Einlaß für das Sterilisiermedium eine Vielzahl von in der Oberwand der Hygienekammer im Abstand zueinander angebrachten Öffnungen aufweist. Sind diese Öffnungen ferner bei einer weiteren Ausgestaltung der Erfindung mit ventilgesteuerten Zuführleitungen verbunden, dann kann man durch die Ventile in den einzelnen Zuführleitungen die eine oder andere Öffnung schließen oder weiter öffnen, um ein bestimmtes Fließmuster des Sterilisiermediums in der Hygienekammer zu erreichen und dieses zu verändern. Die vielen Öffnungen in der Oberwand der Hygienekammer können mehr oder weniger verteilt angeordnet sein. Dabei kann die Dichte der Öffnungen vorzugsweise im Bereich nach dem Einsprühen des Sterilisationsmittels (vorzugsweise in Gasform) und beim ersten Trocknen am größten sein. Dann kann man das Sterilisiermedium mit maximaler Temperatur dort einführen und dann in Förderrichtung oder entgegen dieser weiterblasen.

Bei der erfindungsgemäßen Vorrichtung kann man den gesamten Raum in der Hygienekammer ab Betriebsbeginn steril machen, so daß schon einmal die Grundbelastung der Luft in der Hygienekammer bezüglich Keimen reduziert ist. Durch die erfindungsgemäßen Maßnahmen gelingt es weiterhin mit nur wenig Materialaufwand, die Atmosphäre in der Hygienekammer steril zu halten. Fortlaufend oder gesteuert wird Sterilisiermedium durch die Einlässe in der Oberwand der Hygienekammer eingeführt, während gleichzeitig an den Ein- und Ausgängen für die Packungen und gegebenenfalls auch durch andere Öffnungen mehr oder weniger sterile Luft und auch verkeimte Luft abgesaugt wird. Auf der Oberfläche der jeweiligen Packung wird sich daher kaum eine kontaminierte Schicht mit vielen Keimen halten oder bilden. In der dynamischen Schleuse wird durch die abgesaugten Luftströme eine Art Vorsterilisierung der Flasche durchgeführt. Auch aus dem Inneren der Flasche verunreinigte Luft gelangt vorzugsweise noch im Bereich der dynamischen Schleusen zu den Absaugpunkten und kann mit Vorteil nicht in andere kritischere Bereiche gelangen, insbesondere in den Füllbereich.

Durch die erfindungsgemäßen Maßnahmen kann man definierte Strömungsverhältnisse und Strömungsrichtungen der sterilen Luft erreichen. Die Gefahr einer Rekontamination einer behandelten Flasche oder Packung ist stark verringert.

Mit einfachen Mitteln kann die Luft einem bestimmten Fließmuster unterworfen werden. Durch die Anordnung des geschlossenen Feldes der Packungsträger im oberen Bereich der Hygienekammer kann ein relativ flacher oberer Raum gebildet werden mit der Folge, daß die sterile Luft bzw. das Sterilisiermedium im wesentlichen zu den beiden offenen Enden des geschlossenen Feldes strömt und von dort von der sogenannten Prozeßebene nach unten in den Hauptraum der Hygienekammer. Da Sterilisationsmittel vorzugsweise nur von oben zugeführt wird, nimmt die Konzentration der Sterilluft an Sterilisationsmittel in der Hygienekammer nach unten hin ab. Es kann oberhalb der Prozeßebene in dem oberen Raum ein Volumen höchster Konzentration und an den Enden des geschlossenen Feldes der Packungsträger von hoher Konzentration sowie weiter unten mittlerer bzw. geringer Konzentration an Sterilisationsmittel geschaffen werden.

Die Packungsträger können vorzugsweise die Form von Paletten haben, die man auch Trägerpaletten nennen kann. Die Fördereinrichtung schafft eine Bewegung der Packungsträger entlang einem geschlossenen Weg, der entweder Schleifenform oder die Form eines Rechteckes oder anderen Viereckes haben kann. Dieser geschlossene, mechanische Trägerkreislauf durchläuft die unterschiedlichen Konzentrationsbereiche der Hygienekammer fortlaufend.

Zweckmäßig ist es, wenn Bearbeitungsstationen in dem oberen Raum der Hygienekammer unter deren Oberwand angebracht sind. Die Reihe von in Förderrichtung hintereinander angeordneten Bearbeitungsstationen befindet sich auf der Höhe der sogenannten ersten Prozeßebene, wobei der Förderer im wesentlichen ebenso in dieser Prozeßebene horizontal verläuft wie auch in der darunter angeordneten zweiten Rücklaufebene. Dazwischen sind vertikal arbeitende zweite und vierte Hebeförderer verbunden. Vorzugsweise hat jeder Förderer einen separaten Antrieb. Zwischen der oberen ersten Prozeßebene und der unteren zweiten Rücklaufebene befindet sich horizontal bei einer weiteren Ausgestaltung der Erfindung eine weitere dritte Ladeebene. Alle drei Ebenen sind im wesentlichen horizontal angeordnet.

Jeder Packungsträger hat bei einer vorteilhaften Ausgestaltung der Erfindung einen im wesentlichen ebenen Aufbau und ist über den Förderkreislauf in einer im wesentlichen horizontalen Stellung gehalten. Im Bereich der dritten, mittleren Ladeebene sind Mittel zum Be-und Entladen der Packungen in die und/oder aus den Packungsträgern in einer Laderichtung vorgesehen, die zu der ersten Laufrichtung (der Förderrichtung) der Packungen parallel ist.

Stellt man sich ein vereinfachtes Förderbild mit dem schon erwähnten rechteckigen Förderweg und einen Bewegungsablauf in Uhrzeigerrichtung vor, dann werden die Packungsträger in der ersten Prozeßebene (zum Beispiel links beginnend) von links nach rechts durch den ersten Förderer bewegt, am Ende vertikal von dem zweiten Hebeförderer nach unten in die zweite Rücklaufebene abgesenkt, dort durch den dritten Förderer horizontal nach links zurückbewegt, so daß der vierte Hebeförderer die Packungsträger dann vertikal dann wieder in die Anfangsposition nach oben in die erste Prozeßebene anhebt.

Der kompakte Aufbau der Fördervorrichtung erfährt keinerlei Einschränkung, wenn die mittlere, dritte Ladeebene zwischen der oberen ersten Prozeßebene und der unteren zweiten Rücklaufebene vorgesehen ist. Durch die Anordnung dieser Ladeebene kann aber die Leistung der Fördervorrichtung erheblich dadurch gesteigert werden, daß das Be- und Entladen überraschend schnell durchgeführt werden kann. Die Be- und Entlademittel können mit großer Beschleunigung auf kurzem Wege fertige Packungen von den Packungsträgern abziehen und andererseits leere Packungen an der Beladeposition in die Packungsträger einschieben. Dies kann für eine Vielzahl von Pakkungen gleichzeitig erfolgen, sofern die Packungsträger mehrere Packungen aufnehmen können.

Blickt man wieder auf das einfache Förderbild mit dem oberen Raum über dem geschlossenen Feld der Packungsträger und dem darunter befindlichen Hauptraum der Hygienekammer, dann ist es zweckmäßig, wenn man die dynamische Schleuse sowohl für das Einführen der flaschenförmigen Packungen (Flaschen) als auch für deren Abführen unter dem einlaufseitigen und ablaufseitigen Ende des geschlossenen Feldes der Packungsträger anordnet. Laufen die Packungen beispielsweise eingangsseitig von links nach rechts, wo sie ausgangsseitig abgenommen werden, dann ist die dynamische Schleuse für die Zufuhr von Packungen etwa in der Mitte zwischen der oberen Ebene des geschlossenen Feldes der Packungsträger und dem Rücklaufförderer unten angeordnet. Ausgangsseitig verhält es sich entsprechend mit der dynamischen Entnahmeschleuse. In beiden Fällen ist es dadurch möglich, einen Flaschenträger vertikal direkt aus der Ladeebene in die obere Prozeßebene zu fördern und von dort in den Horizontalförderer umzusetzen, welcher intermittierend den jeweiligen Packungsträger in Förderrichtung um jeweils eine Stufe weiterschaltet. Am Ende der Prozeßebene sind die verschlossenen Packungen noch im Packungsträger, der aber aus der Prozeßebene abgenommen und in die Ladeebene abgesenkt wird, wo er in der dynamischen Entnahmeschleuse aufgenommen und angehalten wird. Dort wird in ähnlicher Weise wie beim Beschicken und Zuführen von ähnlichen Entlademitteln jeweils eine Reihe von Packungen gleichzeitig aus dem Packungsträger ausgeladen. Danach kann der leere Packungsträger auf die untere Rückführebene vertikal abgesenkt werden, so daß er dort nach links unter die dynamische Zuführschleuse bewegt werden kann. Von dort wird der Packungsträger in die Zuführschleuse angehoben.

Es ist dabei günstig, wenn der Packungsträger auf zwei diametral gegenüberliegenden Seiten U-förmige, nach außen offene Ausnehmungen aufweist, die in der ersten Laufrichtung des ersten Förderers ausgerichtet sind. Man kann sich in der Mitte eines U eine vertikale Achse vorstellen. Wenn man unter diesem U im Abstand ein umgekehrtes weiteres U ausgerichtet so anordnet, daß beide Mittelachsen auf eine Linie fallen, dann hat man die vorstehend beschriebene Ausrichtung der zwei Ausnehmungen vorliegen. Außerdem gibt die Erfindung hiernach die Lehre, daß diese Mittellinie der beiden entgegengesetzt aneinander angeordneten U-förmigen Ausnehmungen parallel zu der ersten Laufrichtung ist. Die Ausrichtung dieser Ausnehmungen wirkt sich besonders günstig in der dritten Ladeebene bei Be- und Entladen aus. Beim Entladen wird die eine Packung aus der nach außen in Förderrichtung offenen Ausnehmung herausgeschoben oder -gezogen, wobei diese Bewegungsrichtung zum Beispiel gleich der der ersten Laufrichtung ist. Die andere gegenüberliegende Packung wird dann in die entgegengesetzte Richtung herausbewegt. Beides geschieht gleichzeitig und benötigt nur wenig Zeit. Der andere Vorteil der zwei Ausnehmungen besteht darin, daß der Packungsträger auf diese Weise die doppelte Kapazität bekommt. Der Fachmann weiß, daß die Breite einer Maschine und auch einer Fördervorrichtung nicht beliebig gesteigert werden kann, weil Festigkeitsbedingungen eine Grenze für die Verbreiterung eines Packungsträgers vorgeben. Durch die Anordnung von zwei Ausnehmungen, die zueinander ausgerichtet sind, kann man auf dieser Bahn zwei Packungen anstelle einer haltern, transportieren und ein- sowie ausladen.

Günstig ist es weiterhin, wenn der Packungsträger die Gestalt einer länglichen, sich quer zu der ersten Laufrichtung erstreckenden Leiste derart hat, daß die Ausnehmungen paarweise nebeneinander zu liegen kommen. Außer der vorgenannten Verdoppelung der Kapazität eines Packungsträgers von einer auf zwei Packungen ist die Kapazitätserweiterung in Querrichtung in gewissem Maße möglich, wie die Festigkeitsbedingungen dies zulassen. Hierfür kann man den Packungsträger in Leisten- oder Stabform ausgestalten und die Ausnehmungen paarweise nebeneinander anordnen. Die Be- und Entladeeinrichtungen, die in der dritten Ladeebene arbeiten, können dann alle nebeneinander angeordneten Packungen in einer Leiste auf einmal heraus- oder hineinbewegen. Die Kapazität einer solchen Fördervorrichtung ist dadurch erheblich vergrößert.

Vorteilhaft ist es auch, wenn der Packungsträger für die Halterung von Flaschen ein leistenförmiges Blech mit quer zu der ersten Laufrichtung nebeneinander angeordneten Paaren von einander abgewandten U-förmigen Ausnehmungen ist, deren Breite dem Außendurchmesser des Flaschenhalses entspricht. Ein günstiges Anwendungsgebiet der Fördervorrichtung ist die Aufnahme, Halterung und Transport von vorzugsweise aus Kunststoff gefertigten, oben offenen Flaschen. Die Breite der jeweils U-förmigen Ausnehmung entspricht dann etwa dem Außendurchmesser des betreffenden Flaschenhalses. Es versteht sich, daß man eine Flasche dann nur von außen in den Grund des U hinein zu schieben braucht, um dort eine gute Halterung für die Flasche vorzusehen. Das Entladen ist umgekehrt ebenso günstig. Die Herstellung eines solchen Packungsträgers ist preiswert und technisch überraschend einfach. Ein entsprechend ausgestaltetes Blech oder ein Leiste mit Doppelwandungen und Versteifungsschienen ist einfach herstellbar und benötigt außer der Reinigung keinerlei Wartung. Ein solcher Packungsträger kann in die oben beschriebenen Einrichtungen eingesetzt und über die verschiedenen Förderwege transportiert werden. An den schmalen Enden eines bevorzugten leistenförmigen Bleches können Träger, Stützen und an diesen angebrachte Schienen vorgesehen sein, so daß die Pakkungsträger längs der ersten Prozeßebene und auch längs der zweiten Rücklaufebene mit einfachen Mitteln abgestützt und vorzugsweise gleitend auf Tragschienen verschoben werden.

Es ist von besonderem Vorteil, wenn Mittel vorgesehen sind zum Zuführen von sterilem, gasförmigem Stickstoff in die jeweilige Packung unter Ausfüllen nahezu des gesamten Volumens der Packung mit Stickstoff, vorzugsweise vor dem Befüllen der Packung mit dem Produkt (flüssiges Lebensmittel). Dabei ist es günstig, wenn der Stickstoff etwa bei 20°C eingefüllt wird. Dieser Stickstoff wirkt keimreduzierend bzw. ist keimfrei besonders dann, wenn Stickstoffgas durch ein Sterilfilter geführt wird und die jeweilige Packung, deren Volumen man nahezu vollständig mit Stickstoff ausfüllen wird, dreimal mit dem Volumen der Packung spült. Es hat sich gezeigt, daß beim Abfüllen von Fruchtsäften die Lagerzeit durch diese Maßnahme erheblich gesteigert werden kann. Durch die vorstehenden Maßnahmen ist es nicht notwendig, den von Hause aus nicht sterilen flüssigen Stickstoff vorher mit Wärme zu sterilisieren.

Während das Einfüllen von Stickstoff in das gesamte Volumen der Verpackung vor dem Befüllen mit flüssigem Nahrungsmittel erfolgt, kann man allerdings auch flüssigen Stickstoff in den Kopfraum oberhalb des eingefüllten Lebensmittels eingeben. Der Stickstoff kocht dann auf und gibt dem Kopfraum in der Flasche einen geringen Überdruck, was bisweilen gewünscht sein kann.

Als Behandlungsstation gibt es die Stationen des Vorwärmens, Sterilisierens, zum Beispiel Sprühens und gegebenenfalls mehrmaligen Abtrocknens, des Befüllens und Versiegelns. Hier kann stark dadurch variiert werden, daß zum Beispiel mehrere Vorheizstationen eingebaut werden, mehrere Trockungsstationen vorgesehen werden oder auch Bearbeitungsstationen vorgesehen sind zum Zuführen von Aromastoff oder Zuführen von Orangenstücken, wenn Fruchtsäfte verpackt werden. Alle diese Variationen und Veränderungen der Anzahl und Art von Bearbeitungsstationen im oberen Raum der Hygienekammer beeinflussen die übrigen Maßnahmen des Sterilisierens und des Sterilhaltens nicht.

Als Sterilisiermedium wird vorzugsweise sterile Luft und ein Sterilisationsmittel, zum Beispiel Wasserstoffperoxid, als Gemisch verwendet. Um die Luft steril zu bekommen, wird sie vorgefiltert und dann auf eine Temperatur von über 380°C erwärmt. Diese Sterilluft kann vorzugsweise über etwa 70 bis 90% der Einlaßöffnungen für das Sterilisiermedium in der Oberwand der Hygienekammer eingeführt werden. Durch die restlichen Einlässe wird das Sterilisationsmittel eingeführt. Letzteres erfolgt vorzugsweise im vorderen (bezüglich der Förderrichtung) Bereich des oberen Raumes nach dem Vorheizen der geförderten flaschenförmigen Packungen. Dabei können die Flaschen so von den Packungsträgern gehaltert sein, daß nur die Flaschenhälse und im Falle von oben offenen Flaschen die Öffnungen oberhalb des geschlossenen Feldes der Packungsträger in den oberen Raum hinausragen. Nach dem Vorwärmen der auf diese Weise gehalterten Flaschen wird das Sterilisationsmittel plus sterile Luft zum Beispiel in der ersten Sprühstation oder der ersten Sterilisierstation zugeführt, während danach wieder nur sterile Luft durch die Einlässe in der Oberwand der Hygienekammer eingeführt wird.

Die Öffnungen zum Absaugen der mehr oder weniger stark sterilen Gase befinden sich in einer Wandung der Hygienekammer. Die Gasabsaugeinrichtungen erstrecken sich wie dachförmige Trichter über tunnelartige Räume, welche durch jeweils eine Reihe von zu behandelnden Flaschen oder bereits behandelten Flaschen gefüllt sind. Aus diesen Räumen der dynamischen Schleuse werden die Packungen dann in der beschriebenen Weise gleichzeitig in die Packungsträger geschoben. Dies erfolgt in kürzester Zeit auf kürzestem Wege mit der Folge, daß das Beladen der Packungsträger schnell und problemlos erfolgt. Das Gleiche gilt auch an den Entnahmetunneln, obgleich dort weniger Keime mit den die Flaschen umgebenden Gasen abgesaugt werden.

Ein weiterer Vorteil der U-förmigen Ausnehmungen im Packungsträger mit den auf die Flaschenhälse abgestimmten Breiten liegt darin, daß Flaschenkörper unterschiedlichen Formats von ein und demselben Packungsträger aufgenommen und transportiert werden können, sofern nur die Außenmaße des Flaschenhalses gleich sind. Bei vielen Flaschen unterschiedlichen Formats sind die Halsmaße normiert und haben eine feste Struktur.

Die Packungsträger gemäß eine Ausführungsform der Erfindung sind im Gegensatz zum Stand der Technik nicht starr miteinander verkettet, so daß man sie flexibel staffeln kann. Man kann fast alle Packungsträger zum Beispiel in die erste Prozeßebene fahren und die Einrichtung an den anderen Teilförderern reinigen oder nahezu alle Packungsträger in die zweite Rücklaufebene fahren, um die einzelnen Bearbeitungsstationen von allen Seiten her zu reinigen. Teilabschnitte des Gesamtförderers gemäß der Erfindung können also leergefahren werden. Durch die praktische und einfache Halterung der Pakkungsträger auf den Tragschienen ist es möglich, diese in kürzester Zeit und mit einfachsten Werkzeugen auszutauschen. Dies kann zum Beispiel bei Flaschen- oder Formatwechsel unter Umständen notwendig werden.

Die beidseitige Beladung der Packungsträger, bei einer bevorzugten Ausführungsform von vorne und von hinten erlaubt das beidseitige, kurzzeitige und platzsparende Laden und Transportieren der Packungen.

Weitere Vorteile, Merkmale und Anwendungsmöglichkeiten der vorliegenden Erfindung werden deutlich anhand der folgenden Beschreibung bevorzugter Ausführungsformen in Verbindung mit den anliegenden Zeichnungen. Es zeigen:
- Figur 1: eine Schemazeichnung des gesamten Förderkreislaufes zum sterilen Befüllen von Flaschen unter Darstellung von drei Ebenen und vier Förderem,
- Figur 2: eine isometrische Gesamtansicht der Fördervorrichtung,
- Figur 3: eine ähnliche Schemaansicht der Vorrichtung zum sterilen Befüllen von Flaschen, bei welcher hier der Förderkreislauf weitgehend weggelassen und nur schematisch vereinfacht wiedergegeben ist, allerdings mit Darstellung der Hygienekammer, dem oberen Raum und den durch Pfeile dargestellten Gasströmen,
- Figur 4: eine ähnliche Ansicht wie Figur 3, wobei anstelle der Strömungspfeile durch Grautöne die verschiedenen Räume in der Hygienekammer dargestellt sind, in denen verschiedene Konzentrationen an Sterilisationsmittel gebildet sind, und
- Figur 5: eine isometrische Schrägdraufsicht auf den Packungsträger mit eingesetzten Kunststoffflaschen als Packungen.

Bei den hier gezeigten Ausführungsformen handelt es sich bei den mit 1 bezeichneten Packungen um Kunststoffflaschen, wobei die flaschenförmigen Packungen 1 in der folgenden Beschreibung der bevorzugten Ausführungsformen mit "Flasche" bezeichnet werden. Die Flaschen sitzen in Pakkungsträgern 2. Unter einem Rahmen, welcher gleichzeitig auch die obere Begrenzung einer Hygienekammer 3 bildet, sind diverse Bearbeitungsstationen 4, 5, 6 angebracht, von links nach rechts zum Beispiel Blasdüsen zum Vorheizen, danach Sprühdüsen im Falle eines Einsprühens eines sterilisierenden Gemisches als Sterilisiermedium, danach verschiedene Trocknungsstationen, eine Schneidestation, eine Füllstation 6 und die Siegelstation 5, mit deren Hilfe die gefüllten Flaschen verschlossen werden. Zum Beispiel kann dieses Verschließen bei einer bevorzugten Ausführungsform, welche flüssige Lebensmittel steril verpackt, durch Aufsiegeln einer mit Kunststoff beschichteten Aluminiumfolie erfolgen. Man erkennt, daß alle Bearbeitungsstationen 4 und 6 doppelt ausgebildet sind, d.h. es werden immer zwei Reihen von Flaschen gleichzeitig bearbeitet, in der Füllstation 6 zum Beispiel gefüllt, wohingegen die Siegelstation 5 mit den verhältnismäßig aufwendigen Siegelwerkzeugen nur einfach bzw. einreihig ausgestaltet ist.

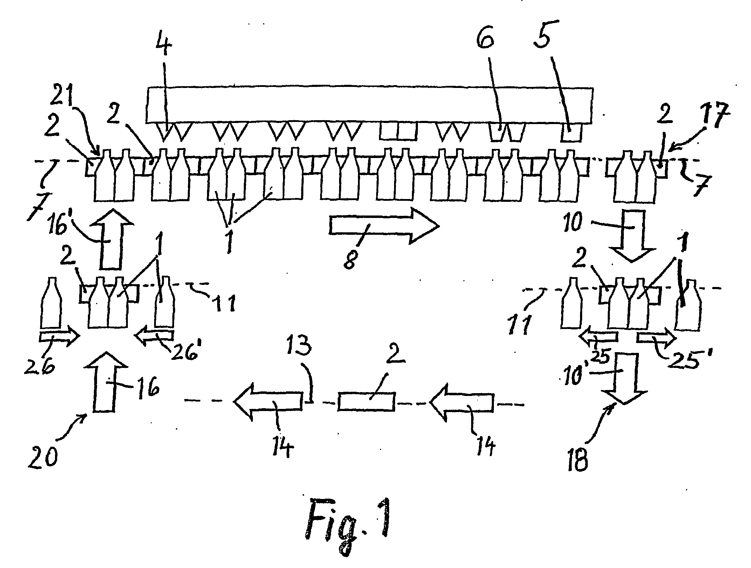

Die Reihe der Packungsträger 2 unter den Bearbeitungsstationen 4 bis 6 befindet sich in der ersten Prozeßebene 7, in welcher die Packungsträger 2 und damit die Flaschen 1 in der in Figur 1 durch den Pfeil 8 dargestellten ersten Laufrichtung bewegt werden, in Figur 1 also von links nach rechts.

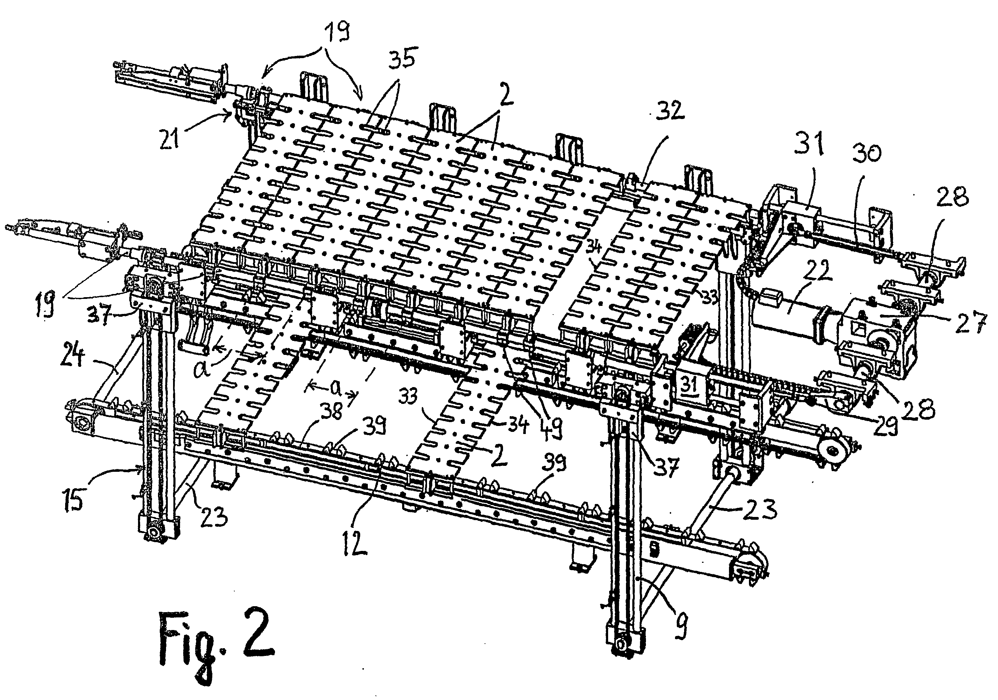

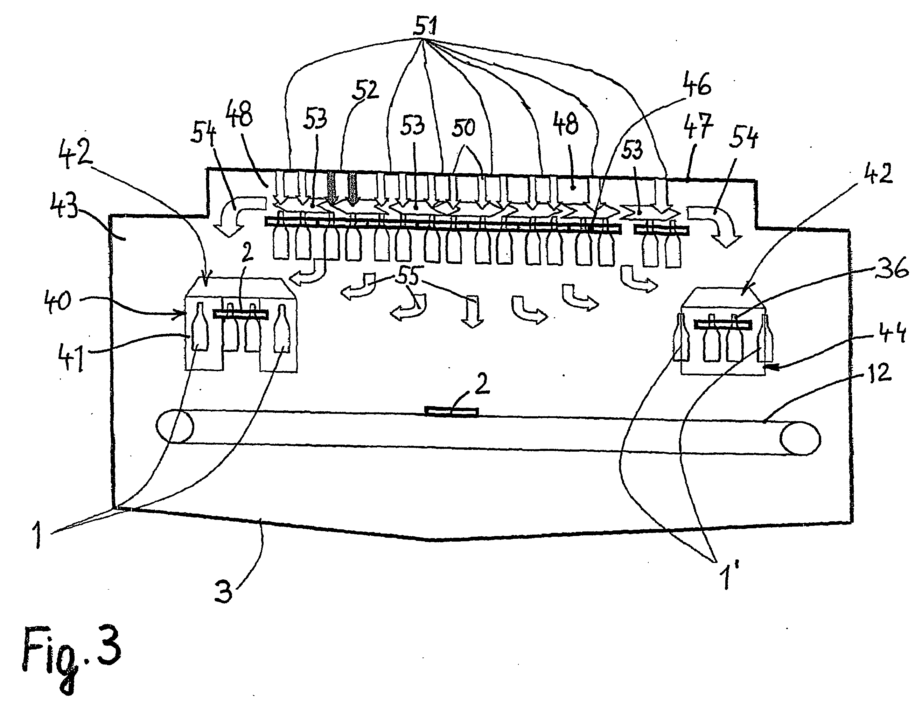

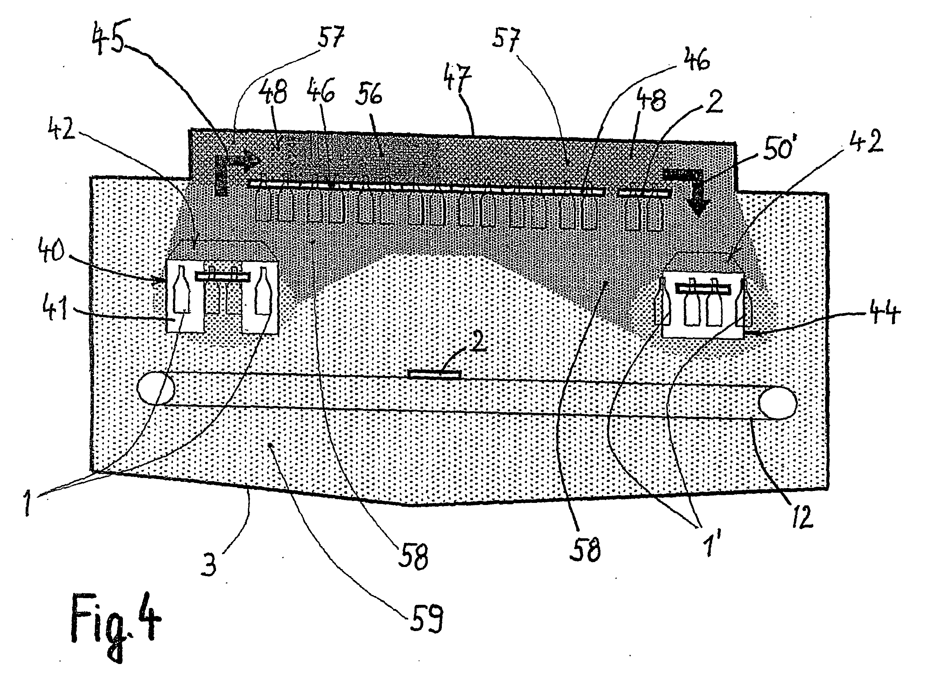

Haben die Flaschen 1 das rechte ablaufseitige Ende in der ersten Prozeßebene 7 erreicht, d.h. sind sie gefüllt und verschlossen, dann wird der betreffende Packungsträger auf den allgemein (Figur 2) mit 9 bezeichneten, vertikal arbeitenden zweiten Hebeförderer umgestellt. In diesem werden die Packungsträger 2 entsprechend den Pfeilen 10 und 10' (vertikale zweite Laufrichtung nach unten) abgesenkt, und zwar zunächst in der zweiten Laufrichtung 10 bis zu einer dritten Ladeebene 11 und danach in der zweiten Laufrichtung 10' auf die unterste Position, wo der Packungsträger 2 mit Hilfe des horizontal arbeitenden dritten Förderers 12 (Figuren 2 und 4) in der zweiten Rücklaufebene 13 bewegt wird. Diese Bewegung ist durch die in Figur 1 unten nach links gerichteten Pfeile 14 gezeigt, welche eine dritte Laufrichtung vorgeben, die der ersten Laufrichtung entgegengerichtet aber parallel zu dieser verläuft. Ist der Packungsträger 2 nach vollem Durchlauf in der zweiten Rücklaufebene 13 am Förderende links unten angekommen, wird er auf den vierten Hebeförderer 15 (Figur 3) umgestellt, der vertikal nach oben in Richtung der Pfeile16 und 16 arbeitet, welches die vierte Laufrichtung ist. Dieses vertikale Anheben des vierten Hebeförderers 15 erfolgt in zwei Stufen. Die erste Stufe ist durch den unteren Pfeil 16 dargestellt und reicht bis zu der dritten Ladeebene 11, wonach sich die zweite Hälfte der vierten Laufrichtung 16' anschließt, bis der Packungsträger 2 auf dem Niveau der ersten Prozeßebene 7 angelangt ist und dort umgesetzt wird, um die intermittierende Bewegung in der ersten Laufrichtung 8 zu beginnen.

Es gibt also gemäß den Figuren 1 und 2 einen von der Seite her gesehenen rechteckigen Förderkreislauf mit einer horizontalen ersten Laufrichtung 8, der sich am rechten, ablaufseitigen Ende die vertikale zweite Laufrichtung 10 und 10' anschließt, mit der dritten Laufrichtung 14 vom rechten unteren Ende bis zum linken unteren Ende und von dort in der vierten Laufrichtung 16, 16' nach oben wieder zurück auf die erste Prozeßebene 7.

Ferner erkennt man in Figur 1 drei parallel zueinander verlaufende, gestrichelte Linien, welche die erste Prozeßebene 7, die zweite Rücklaufebene 13 und die dritte Ladeebene 11 darstellen. Über bzw. unter dem zweiten Hebeförderer 9 und auch über bzw. unter dem vierten Hebeförderer 15 befinden sich übereinanderliegende Enden 17 bzw. 18 sowie 20 bzw. 21. 17 ist dabei das oben liegende Ende zwischen dem horizontal arbeitenden und entlang der ersten Laufrichtung in der ersten Prozeßebene 7 arbeitenden ersten Förderer 19 und dem zweiten Hebeförderer 9. Das unten liegende Ende 18 ist das Ende des zweiten Hebeförderers 9 und der Anfang des dritten Förderers 12, der horizontal in der dritten Laufrichtung 14 arbeitet. Letzterer endet in dem unten liegenden Ende 20 des vierten Hebeförderers 15. Der vertikal und nach oben arbeitende vierte Hebeförderer 15 schafft den Packungsträger 2 letztlich wieder auf die erste Prozeßebene 7, und zwar an dem oben liegenden Ende 21 des vierten Hebeförderers.

Entsprechend den Laufrichtungen gibt es auch die vier separat voneinander angetriebenen Förderer, nämlich den ersten, horizontal verlaufenden Förderer 19, den zweiten, vertikal verlaufenden Hebeförderer 9, den dritten, horizontal verlaufenden Förderer 12 und den vierten, ebenfalls vertikal arbeitenden Hebeförderer 15.

Der erste Förderer 19 hat das vordere Ende 21 und das hintere Ende 17. Das vordere Ende 21 liegt über dem unteren Ende 20 des vierten Hebeförderers 15, während das Ende 17 des ersten Förderers 19 über dem unten liegenden Ende 18 des zweiten Hebeförderers 15 liegt. Ersichtlich liegen die Enden 17 und 18 einerseits sowie 21 und 20 andererseits übereinander. Der erste Förderer 19 hat einen Motor 22 als separaten Antrieb. Sowohl der Hebeförderer 9 als auch der Hebeförderer 15 haben jeweils einen separaten Motor, der in Figur 2 an dem jeweils hinteren Förderer angebracht und daher nicht zu sehen ist. Ihre Drehkraft wird über die Antriebswellen 23 weitergeleitet. Der horizontal arbeitende dritte Förderer 12 in der zweiten Rücklaufebene 13 wird auch über einen separaten Motor angetrieben, der in Figur 2 am linken unteren und hinteren Ende zu denken und daher nicht dargestellt ist. Seine Drehkraft wird über die Antriebswelle 24 auf die horizontalen Förderstränge 12 übertragen.

Nicht nur die dritte Ladeebene 11 verläuft parallel zu der ersten Prozeßebene 7, sondern auch die durch die Pfeile 25, 25' und 26, 26' dargestellte Laderichtungen. Die Mittel zum Be- und Entladen sind in den Zeichnungen nicht dargestellt. Man kann sich aber leicht an oszillierend hin- und herbeweglichen Stangen angebrachte Schieber vorstellen, mit welchen eine ganze Reihe von Flaschen gleichzeitig zum Entladen in den Richtungen 25 nach rechts und links und zum Beladen in Richtung 26 von rechts und von links in die Mitte bewegt wird.

Im Betrieb des Förderers verläuft die Bewegung der Packungsträger 2 etwa gemäß Darstellung der Figuren 1 und 2 derart, daß die meisten Packungsträger 2 sich in der ersten Prozeßebene 7 befinden und nur einer oder zwei Packungsträger sich zum Beispiel im Rücklauf befinden. Der Motor 22 (Figur 2) treibt über ein Getriebe 27 von der Mitte aus nach beiden Seiten hin jeweils eine Welle 28, so daß auf jeder Seite über eine Kurbelschwinge 29 und eine Pleuelstange 30 eine oszillierend hinund hergehende Bewegung eines Schlittens 31 erzeugt wird, um auf jeder Seite eine Schubstange 32 in die erste Laufrichtung 8 und umgekehrt in die entgegengesetzte Laufrichtung zu bewegen. Hierdurch wird die intermittierende Bewegung der einzelnen Packungsträger 2 um jeweils eine Taktlänge besorgt, insbesondere bei der Bewegung von einer Bearbeitungsstation 4 zur nächsten usw. bis zu der Füllstation 6. Von dort an erfolgt eine zweistufige Bewegung zu der Siegelstation 5 hin, wie noch unten beschrieben wird.

In Figur 3 sieht man die Hygienekammer 3, in deren unterem Bereich sich der dritte Förderer 12 befindet. Dieser bewegt gerade einen Packungsträger 2 nach links unter die allgemein mit 40 bezeichnete Flaschenzuführeinrichtung. Diese besteht aus zwei im Abstand voneinander angeordneten tunnelartigen Räumen 41, in denen flaschenförmige Packungen 1 gezeigt sind. Diese Flaschen sind gerade durch nicht dargestellte Packungsdurchtrittsöffnungen entgegen der Blickrichtung des Betrachters der Figur 3 in den Hygieneraum 3 hereingefördert worden. Den zwischen den zwei tunnelartigen Räumen 41 angeordneten Packungsträger muß man sich zunächst leer vorstellen. Erst nachdem durch rechenartige Schiebeeinrichtungen aus nicht dargestellten Halteleisten die Flaschen 1 von rechts und von links seitlich in den Packungsträger 2 eingeschoben worden sind, befinden sich die Flaschen auch am Packungsträger 2 gehaltert, wie in Figur 3 dargestellt. Dann aber müßten die Flaschen 1 in den tunnelartigen Räumen 41 herausgenommen gedacht werden. Die Gasabsaugeinrichtungen sind allgemein mit 42 bezeichnet. Sie befinden sich über den tunnelartigen Räumen 41 und erstrecken sich in Blickrichtung des Betrachters der Figur 3 von vorn bis nach hinten zu der mit 43 bezeichneten rückwärtigen Wand der Hygienekammer 3. In dieser Wand 43 befinden sich entsprechend ausgestaltete und bemessene Löcher, durch welche die Gase in den Raum hinter der Hygienekammer 3 und außerhalb derselben abgesaugt werden können.

Ein ähnlicher Aufbau befindet sich auch unter dem abstromseitigen Ende der oberen Prozeßebene 7, nämlich auf der der Flaschenzuführeinrichtung 40 gegenüberliegenden Seite. Hier ist mit 44 allgemein die Flaschenentnahmeeinrichtung bezeichnet. Sie besteht in ähnlicher Weise wie die Flaschenzuführeinrichtung 40 aus tunnelartigen Räumen, in denen sich hier die steril befüllten und verschlossenen Flaschen 1' befinden. Darüber ist wieder eine Gasabsaugeinrichtung 42 angebracht.

Man kann sich vorstellen, daß die in den Figuren 3 und 4 nicht dargestellten Hebeeinrichtungen die Packungsträger 2 von unten nach oben bzw. von oben nach unten bewegen, so daß sich der in beiden Figuren oben dargestellte Strang von hintereinander angeordneten und aneinanderliegend bewegbaren Packungsträgern 2 ergibt. Der links oben dargestellte L-förmige schwarze Pfeil, der nach rechts zeigt, veranschaulicht die Bewegungsbahn 45 des Packungsträgers 2, der gerade von dem Anhebeförderer in die Prozeßebene 7 umgesetzt wird. Durch den Strang der aneinanderliegenden Packungsträger 2 ergibt sich das überwiegend geschlossene Feld 46 von Packungsträgern 2. Zwischen diesem und der im Abstand und parallel zu diesem angeordneten Oberwand 47 der Hygienekammer 3 befindet sich der sogenannte obere Raum 48. Dieser erstreckt sich von dem einlaufseitigen Ende neben dem Pfeil 45 bis zu dem auslaufseitigen Ende an dem anderen L-förmigen Pfeil 50', der nach unten zeigt und veranschaulicht, wie der letzte Packungsträger 2 nach unten in die mittlere Ladeebene bewegt wird.

In Figur 3 hat man sich in der Oberwand 47 der Hygienekammer 3 eine Vielzahl von Öffnungen als Einlaß 50 für Sterilisiermedium zu denken. Die vielen weißen Pfeile zeigen den Eintritt von steriler Luft aus einer Quelle 51 für sterile Luft. Die zwei dunklen Pfeile bedeuten die Zufuhr von Sterilisationsmittel aus einer Quelle 52. Sowohl das Sterilisationsmittel aus der Quelle 52 als auch die sterile Luft aus der Quelle 51, insgesamt also das (vermischte) Sterilisiermedium strömt in den oberen Raum 48 der Hygienekammer 3 (in Figur 3 senkrecht von oben nach unten) ein und wird durch das überwiegend geschlossene Feld 46 der Packungsträger 2 so umgelenkt, daß es im wesentlichen parallel zur Förderrichtung (erste Laufrichtung 8) der Packungsträger 2 strömt. Diese Strömung des Sterilisiermediums ist in Figur 3 durch die horizontalen Pfeile 53 und die an den Enden des geschlossenen Feldes 46 gezeigten gebogenen Pfeile 54 dargestellt. Kleinere Mengen an Sterilisiermedium gelangen auch durch die Löcher und Spalte in den Packungsträgern 2, d.h. durch das geschlossene Feld 46, und sind in Form der unteren Pfeile 55 als Strömung des Sterilisiermediums veranschaulicht. Man sieht, wie das Sterilisiermedium nach Verlassen des oberen Raumes 48 allmählich zu den Gasabsaugeinrichtungen 42 gezogen wird.

Durch die in der Figur 3 beschriebenen und dargestellten Strömungen des Sterilisiermediums, welchem ja Sterilisationsmittel, zum Beispiel H₂O₂, zugemischt ist, entstehen verschiedene Räume unterschiedlicher Konzentration des Sterilisiermediums an Sterilisationsmittel, wie in Figur 4 gezeigt ist. Das Innere der Hygienekammer 3 ist überall mit Sterilisiermedium gefüllt, dessen Konzentration an Sterilisationsmittel ist aber unterschiedlich. Direkt neben demjenigen Einlaß 50 für Sterilisiermedium, in welchen Sterilisationsmittel aus der Quelle 52 kommt (zwei dunkle Pfeile), entwickelt sich ein Bereich 56 höchster Konzentration des Sterilisiermediums an Sterilisationsmittel in dem oberen Raum 48. Abstromig und aufstromig von diesem Bereich 56 entwickeln sich durch das Einströmen von steriler Luft durch die Mehrzahl der Öffnungen aus der Quelle 51 für sterile Luft Bereiche 57 hoher Konzentration des Sterilisiermediums an Sterilisationsmittel. Neben und unter dem geschlossenen Feld 46 der Packungsträger 2 entwickelt sich infolgedessen ein Bereich 58 mittlerer Konzentration des Sterilisiermediums an Sterilisationsmittel. In den übrigen Teilen der Hygienekammer 3 entwickelt sich der Bereich 59 niedriger Konzentration des Sterilisiermediums an Sterilisationsmittel. Die verschiedenen Bereiche 56 - 59 sind durch unterschiedlich starke Graufärbung in Figur 4 gekennzeichnet.

In der Flaschenzuführeinrichtung 40 und in der Flaschenentnahmeeinrichtung 44 zeigen die weißen Felder in den tunnelartigen Räumen 41 das Fehlen an Sterilisationsmittel (Bereiche minimaler Konzentration).

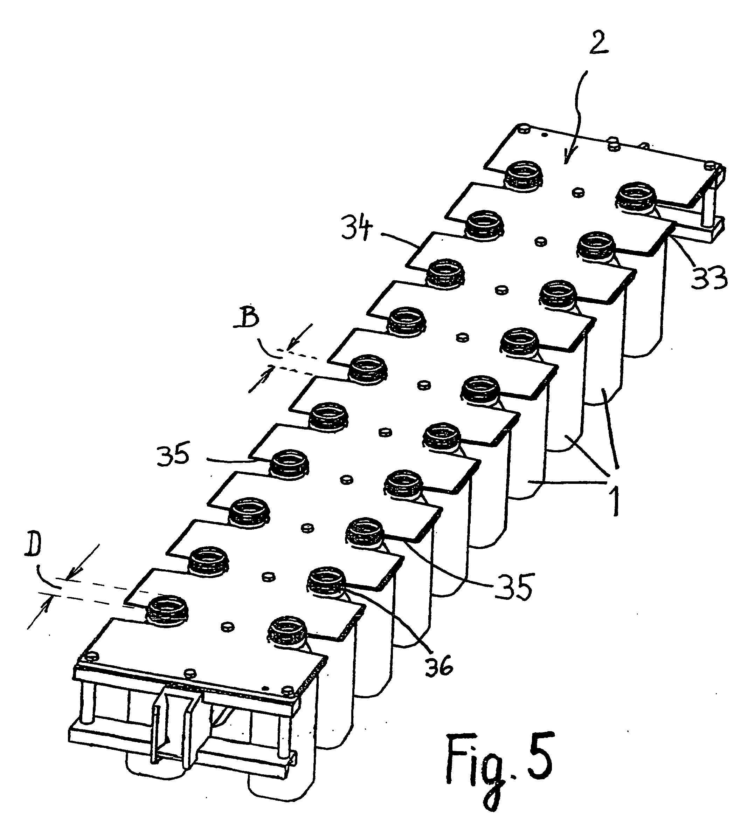

Jeder Packungsträger 2 hat bei der hier dargestellten bevorzugten Ausführungsform die Gestalt einer länglichen, sich quer zu der ersten Laufrichtung 8 erstreckenden Leiste und die Gestalt eines Bleches. Von der Vorderseite 33 (Figur 5) des Packungsträgers 2 erstrecken sich U-förmige, nach außen zu dieser Seite 33 hin offene Ausnehmungen 35. Auch von der diametral gegenüberliegenden hinteren Seite 34 des Packungsträgers 2 erstreckt sich - allerdings umgekehrt zu den Ausnehmungen auf der Vorderseite 33 - eine Reihe von nach hinten offenen Ausnehmungen 35. Da es sich bei den Packungen 1 hier um Flaschen mit einem an deren Öffnung angeordneten Hals 36 handelt, ist die Breite B (Figur 5) auf den Außendurchmesser D (Figur 5) so abgestimmt, daß die Flasche mit ihrem Hals 36, der zum Beispiel Außengewinde hat, in die Ausnehmung 35 hereinfahren und dort gehalten werden kann. Diese Halterung ist unabhängig von der Ausgestaltung der Flasche im unteren Bereich, sei es daß sie lang, rund, eckig, kurz, groß oder klein ist. Der zweite Hebeförderer 9 und der vierte Hebeförderer 15 arbeiten mit vertikal angetriebenen Schlitten 37, die auf beiden Seiten mit den jeweiligen Packungsträgern 2 in Eingriff kommen und diese von der ersten Prozeßebene 7 absenken in die zweite Rücklaufebene 13 (Hebeförderer 9) oder umgekehrt (Hebeförderer 15). Der dritte, horizontal arbeitende Förderer 12 arbeitet mit einem Endlosriemen 38 mit aufgesetzten Taschen 39, in denen die Packungsträger 2 vertikal eingeschoben werden.

Auf jeder Schubstange 32 sind in Abständen a (Figur 2) Vorschubnocken 49 in einem bestimmten Winkel von der Schubstange 32 radial abstehend angebracht. Dieser Abstand a ist gleich dem Mittenabstand zweier benachbart aneinander gefahrener Packungsträger 2. Dadurch können die Schubstangen 32 über nicht näher beschriebene Verriegelungsnuten oszillierend angetrieben werden.

Im Betrieb der neuen Befüllungsvorrichtung werden die Flaschen 1 durch die rückwärtige Wand 43 der Hygienekammer 3 entgegen der Blickrichtung des Betrachters der Figuren 3 und 4 an einer Halterungsschiene hereingeführt, an welcher ebenso viele Flaschen 1 hängen, wie dann in den Packungsträger 2 (Figur 5) eingeführt werden können. Durch die der Flaschenkontur angepaßte Form der Eintrittsöffnungen in der rückwärtigen Wand 43 zu der Flaschenzuführeinrichtung 40 hin wird die meiste verunreinigte Umgebungsluft bereits zurückgehalten, ein gewisser Anteil strömt aber noch mit in den tunnelartigen Raum 41 und wird dort über die Gasabsaugeinrichtung 42 entfernt. Auch das Volumen innerhalb der Flasche unterliegt der Absaugung und wird allmählich entfernt und durch die Gase aus der Hygienekammer 3 ersetzt. Nach dem Beladen des Packungsträgers 2 sind die äußeren tunnelartigen Räume 41 leer, so daß der Packungsträger 2 durch den nach oben leeren Raum aus der Ladeebene 11 nach oben in die erste Prozeßebene 7 gefördert werden kann, wo er gemäß Bewegungsbahn 45 (schwarzer Pfeil, Figur 4) auf den horizontalen Förderer umgesetzt wird. Hier schließt der Packungsträger 2 an den schon vorhandenen Strang der Pakkungsträger an, so daß sich das geschlossene Feld 46 der Packungsträger 2 ergibt, wie in den Figuren 1 bis 4 veranschaulicht ist. Die Flaschenöffnungen sind inzwischen durch den Bereich 58 mittlerer Konzentration in den Bereich 57 hoher Konzentration bewegt worden und fahren jetzt bei ihrer ersten Laufrichtung 8 (in den Figuren 1 bis 4 von links nach rechts) unter die Öffnungen des Einlasses 50 für Sterilisiermedium. Im Bereich des Sterilisierens und danach Trocknens gelangen die Flaschen in den Bereich 56 höchster Konzentration und sind nach dem Abtrocknen des eingesprühten Sterilisationsmittels als keimfrei und steril anzusehen. Sie werden dann für die weiteren Bearbeitungen, wie zum Beispiel Füllen und Verschließen, weiter nach rechts in einen Bereich 57 hoher Konzentration geführt und gelangen am abstromseitigen Ende des geschlossenen Feldes 46 zum Umsetzen gemäß dem rechten, L-förmigen schwarzen Pfeil 50' in Figur 4 in den Hebeförderer.

Der Packungsträger 2 mit den behandelten, steril befüllten und verschlossenen Flaschen 1 wird nach unten in die dritte Ladeebene 11 geföderf. Dort befinden sich ähnliche Schiebeeinrichtungen wie im Bereich der Flaschenzuführeinrichtung 40, die hier aber in der Flaschenentnahmeeinrichtung 44 die behandelten Flaschen von dem Flaschenträger oder Packungsträger 2 seitlich nach außen in die Position 1' abnehmen. Von dort können die so umgesetzten Flaschen 1' in Blickrichtung des Betrachters der Figuren 3 und 4 aus der Hygienekammer herausgeführt und auf andere Förderbänder umgesetzt werden.

### Bezugszeichenliste:

- 1: Packung, Flasche
- 2: Packungsträger
- 3: Hygienekammer
- 4,5,6: Bearbeitungsstationen
- 5: Siegelstation
- 6: Füllstation
- 7: erste Prozeßebene
- 8: erste Laufrichtung (Förderrichtung)
- 9: zweiter Hebeförderer
- 10, 10': zweite Laufrichtung
- 11: dritte Ladeebene
- 12: dritter Förderer
- 13: zweite Rücklaufebene
- 14: dritte Laufrichtung
- 15: vierter Hebeförderer
- 16, 16': vierte Laufrichtung
- 17: oben liegendes Ende des zweiten Hebeförderers 9
- 18: unten liegendes Ende des zweiten Hebeförderers 9
- 19: erster Förderer
- 20: unten liegendes Ende des vierten Hebeförderers 15
- 21: oben liegendes Ende des vierten Hebeförderers 15
- 22: Motor, Antrieb
- 23, 24: Antriebswellen
- 25, 25': Laderichtung (Entladen)
- 26, 26': Laderichtung (Beladen)
- 27: Getriebe
- 28: Welle
- 29: Kurbelschwinge
- 30: Pleuelstange
- 31: Schlitten
- 32: Schubstange
- 33: Vorderseite des Packungsträgers
- 34: Hinterseite des Packungsträgers
- 35: Ausnehmung
- 36: Flaschenhals
- 37: Schlitten
- 38: Endlosriemen
- 39: Tasche
- 40: Flaschenzuführeinrichtung
- 41: tunnelartiger Raum
- 42: Gasabsaugeinrichtung
- 43: rückwärtige Wand der Hygienekammer 3
- 44: Flaschenentnahmeeinrichtung
- 45: Bewegungsrichtung des Packungsträgers 2
- 46: geschlossenes Feld der Packungsträger 2
- 47: Oberwand der Hygienekammer 3
- 48: oberer Raum
- 49: Vorschubnocken
- 50: Einlaß für Sterilisiermedium
- 50': rechter Pfeil für Bewegungsbahn der Packungsträger 2
- 51: Quelle für sterile Luft
- 52: Quelle für Sterilisationsmittel
- 53: Strömung des Sterilisiermediums (horizontale, gerade Pfeile)
- 54: Strömung des Sterilisiermediums (gebogene Pfeile)
- 55: Strömung des Sterilisiermediums (untere Pfeile)
- 56: Bereich höchster Konzentration des Sterilisiermediums an Sterilisationsmittel
- 57: Bereich hoher Konzentration des Sterilisiermediums an Sterilisationsmittel
- 58: Bereich mittlerer Konzentration des Sterilisiermediums an Sterilisationsmittel
- 59: Bereich niedriger Konzentration des Sterilisiermediums an Sterilisationsmittel

- a: Abstand der Vorschubnocken
- B: Breite der Ausnehmungen 35
- D: Außendurchmesser des Flaschenhalses

## Patentansprüche

1. Vorrichtung zum sterilen Befüllen von flaschenförmigen Packungen (1) mit fließfähigen Lebensmitteln, zum Beispiel Getränken, bei welcher eine intermittierend angetriebene Fördereinrichtung (19) in einer Linie in eine erste Förderrichtung (8) hintereinander angeordnete, durch Bearbeitungsstationen (4, 5, 6) bewegbare Packungsträger (2) aufweist und in einer am Ein- (40) und Austritt (44) mit Packungsdurchtrittsöffnungen und mit wenigstens einem Einlaß (50) für Sterilisiermedium Versehenen Hygienekammer (3) angeordnet ist, mit Mitteln (19, 27 - 32) zum aneinanderliegenden Bewegen der Packungsträger (2) im Bereich des Obertrums der Fördereinrichtung (19) derart, daß die Packungsträger (2) in einer Prozeßebene (7) ein überwiegend geschlossenes Feld (46) bilden, das unter Bildung eines oberen Raumes (48) im Abstand von der Oberwand (47) der Hygienekammer (3) angeordnet ist, mit einem in der Oberwand (47) der Hygienekammer (3) angebrachten Einlaß (50) für das Sterilisiermedium, Mitteln zum Eindrücken des Sterilisiermediums unter Überdruck in den oberen Raum (48) der Hygienekammer (3) und mit Mitteln zum Führen des Sterilisiermediums im wesentlichen parallel zur ersten Förderrichtung (8) der Packungsträger (2),
**gekennzeichnet durch**
Mittel zum Be-und Entladen von Packungen (1) in einer Ladeebene (11), die parallel und im Abstand von der Prozeßebene (7) verläuft,
einen weiteren Förderer (12) in einer Rücklaufebene (13) mit einer Laufrichtung (14) parallel aber entgegengesetzt der ersten Förderrichtung (8) in der Prozeßebene (7),
Spalte an den Enden des geschlossenen Trägerfeldes (46) in der Hygienekammer (3) neben ihren Stirnflächen zum Herausführen des Sterilisiermediums aus dem oberen Raum (48) und **durch** die als dynamische Schleusen ausgestalteten Packungsdurchtrittsöffnungen und
neben den Packungsdurchtrittsöffnungen und außerhalb der Hygienekammer (3) angebrachte Gasabsaugeinrichtungen (42) zum Absaugen der Gase nach außerhalb der Hygienekammer (3).

2. Vorrichtung nach Anspruch 1, **dadurch gekennzeichnet, daß** der Einlaß (50) für das Sterilisiermedium eine Vielzahl von in der Oberwand (47) der Hygienekammer (3) im Abstand zueinander angebrachten Öffnungen aufweist.

3. Vorrichtung nach Anspruch 2, **dadurch gekennzeichnet, daß** die Öffnungen mit ventilgesteuerten Zuführleitungen verbunden sind.

4. Vorrichtung nach einem der Ansprüche 1 bis 3, **dadurch gekennzeichnet, daß** Bearbeitungsstationen (4, 5, 6) in dem oberen Raum (48) der Hygienekammer (3) unter deren Oberwand (47) angebracht sind.

5. Vorrichtung nach einem der Ansprüche 1 bis 4, **dadurch gekennzeichnet, daß** jeder Packungsträger (2) einen im wesentlichen ebenen Aufbau hat und über einen Förderkreislauf in einer im wesentlichen horizontalen Stellung gehalten ist.

6. Vorrichtung nach einem der Ansprüche 1 bis 5, **dadurch gekennzeichnet, daß** der Pakkungsträger (2) auf zwei diametral gegenüberliegenden Seiten (33, 34) U-förmige, nach außen offene Ausnehmungen (35) aufweist, die parallel zu der ersten Förderrichtung (8) ausgerichtet sind.

7. Vorrichtung nach Anspruch 6, **dadurch gekennzeichnet, daß** der Pakkungsträger (2) die Gestalt einer länglichen, sich quer zu der ersten Förderrichtung (8) erstreckenden Leiste derart hat, daß die Ausnehmungen (35) paarweise nebeneinander zu liegen kommen.

8. Vorrichtung nach einem der Ansprüche 1 bis 7, **dadurch gekennzeichnet, daß** der Pakkungsträger (2)für die Halterung von flaschenförmigen Packungen (1) ein leistenförmiges Blech mit quer zu der ersten Förderrichtung (8) nebeneinander angeordneten Paaren von einander abgewandten U-förmigen Ausnehmungen (35) ist, deren Breite (B) etwa dem Außendurchmesser (D) des Halses (36) der flaschenförmigen Pakkung (1) entspricht.

9. Vorrichtung nach einem der Ansprüche 1 bis 8, **gekennzeichnet durch** Mittel zum Zuführen von sterilem, gasförmigem Stickstoff in die jeweilige Packung (1) unter Ausfüllen nahezu des gesamten Volumens der Packung (1) mit Stickstoff, vorzugsweise vor dem Befüllen der Packung (1) mit dem flüssigen Lebensmittel.

## Claims

1. A device for the sterile filling of bottle-shaped packages (1) with fluid foodstuffs, for example drinks, in which an intermittently driven conveyor (19) has package carriers (2) which arranged one behind the other in a line in a first conveyance direction (8) and which can be moved through processing stations (4, 5, 6), and is arranged in a hygiene chamber (3) provided with openings for the packages to pass through at the entrance (40) and exit (41), and with at least one inlet (50) for sterilising medium, with means (19, 27-32) for the movement of the package carriers (2) in mutually contacting relationship in the region of the upper run of the conveyor (19), such that the package carriers (2) in a process level (7) form a predominantly closed field (46) which is arranged with the formation of an upper space (48) at a spacing from the upper wall (47) of the hygiene chamber (3), an inlet (50) for the sterilising medium provided in the upper wall (47) of the hygiene chamber (3), means for urging the sterilising medium under increased pressure into the upper space (48) of the hygiene chamber (3), and means for passing the sterilising medium substantially parallel to the first conveyance direction (8) of the package carriers (2),
**characterised by**
means for loading and unloading packages (1) in a loading level (11) which extends parallel to and at a spacing from the process level (7),
a further conveyor (12) in a return level (13) with a direction of travel (14) parallel to but in opposite relationship to the first conveyance direction (8) in the process level (7),
gaps at the ends of the closed carrier field (46) in the hygiene chamber (3) beside the end surfaces thereof for passing the sterilising medium out of the upper space (48) and through the openings for the packages to pass through which are in the from of dynamic locks, and
gas extraction devices (42) disposed beside the openings for the packages to pass through and outside the hygiene chamber (3) for sucking away the gases to outside of the hygiene chamber (3).

2. A device according to claim 1 **characterised in that** the inlet (50) for the sterilising medium has a plurality of openings disposed at a spacing from each other in the upper wall (47) of the hygiene chamber (3).

3. A device according to claim 2 **characterised in that** the openings are connected to valve-controlled delivery lines.

4. A device according to one of claims 1 to 3 **characterised in that** processing stations (4, 5, 6) are installed in the upper space (48) of the hygiene chamber (3) below its upper wall (47).

5. A device according to one of claims 1 to 4 **characterised in that** each package carrier (2) is of a substantially flat structure and is held above a conveyance circuit in an substantially horizontal position.

6. A device according to one of claims 1 to 5 **characterised in that** the package carrier (2) on two diametrically opposite sides (33, 34) has U-shaped outwardly open recesses (35) which are oriented parallel to the first conveyance direction (8).

7. A device according to one of claims 1 to 6 **characterised in that** the package carrier (2) has the form of an elongated strip extending transversely with respect to the first conveyance direction (8), such that the recesses (35) come to lie next to each other in pairs.

8. A device according to one of claims 1 to 7 **characterised in that** the package carrier (2) for holding bottle-shaped packages (1) is a strip-shaped sheet with pairs of U-shaped recesses (35) facing away from each other, the pairs being arranged next to each other transversely with respect to the first conveyance direction (8), the width (B) of the recesses corresponding approximately to the external diameter (D) of the neck (36) of the bottle-shaped package (1).

9. A device according to one of claims 1 to 8 **characterised by** means for feeding sterile, gaseous nitrogen into the respective package (1) to fill almost the whole volume of the package (1) with nitrogen, preferably before filling of the package (1) with the liquid foodstuff.

## Revendications

1. Dispositif de remplissage stérile d'emballages (1) en forme de bouteilles avec des produits alimentaires fluides, par exemple des boissons, dans lequel un dispositif de transport (19) entraîné par intermittence comporte des supports d'emballage, disposés en ligne les uns derrière les autres dans une première direction de déplacement (8) et passant par des stations de traitement (4, 5, 6), et est disposé dans une chambre d'hygiène (3) qui est dotée, à l'entrée (40) et à la sortie (44), d'ouvertures de passage d'emballages et d'au moins une entrée (50) destinée au fluide de stérilisation, de moyens (19, 27 à 32) destinés à déplacer de façon adjacente les supports d'emballage (2) au niveau du brin supérieur du dispositif de transport (19) de telle sorte que les supports d'emballage (2) forment dans un plan de traitement (7) une zone essentiellement fermée (46) qui est disposée à distance de la paroi supérieure (47) de la chambre d'hygiène (3) en formant un espace supérieur (48), d'une entrée (50) destinée au fluide de stérilisation qui est ménagée dans la paroi supérieure (47) de la chambre d'hygiène (3), de moyens d'injection du fluide de stérilisation avec une surpression dans l'espace supérieur (48) de la chambre d'hygiène (3), et de moyens d'amenée du fluide de stérilisation sensiblement parallèlement à une première direction de transport (8) des supports d'emballage (2),
**caractérisé par**
des moyens de chargement et déchargement des emballages (1) dans un plan de chargement (11) qui s'étend parallèlement au plan de traitement (7),
un autre transporteur (12) placé dans un plan de retour (13) avec une direction de déplacement (14) parallèle mais opposée à la première direction de déplacement (8) dans le plan de traitement (7),
des fentes aux extrémités de la zone de support fermée (46) dans la chambre d'hygiène (3) à côté de la surface frontale pour faire sortir le fluide de stérilisation de l'espace (48) et par les ouvertures de passage d'emballages conformées en sas dynamique, et
des dispositifs d'évacuation de gaz montés à côté des ouvertures de passage d'emballages et à l'extérieur de la chambre d'hygiène (3) et destinés à évacuer les gaz par aspiration vers l'extérieur de la chambre d'hygiène (3).

2. Dispositif selon la revendication 1, **caractérisé en ce que** l'entrée (50) destinée au fluide de stérilisation comporte un grand nombre d'ouvertures ménagées à distance les unes des autres dans la paroi supérieure (47) de la chambre d'hygiène (3).

3. Dispositif selon la revendication 2, **caractérisé en ce que** les ouvertures sont reliées à des conduites d'amenée commandées par clapet.

4. Dispositif selon l'une des revendications 1 à 3, **caractérisé en ce que** des stations de traitement (4, 5, 6) sont montées dans l'espace supérieur (48) de la chambre d'hygiène (3) sous sa paroi supérieure (47).

5. Dispositif selon l'une des revendications 1 à 4, **caractérisé en ce que** chaque support d'emballage (2) a une structure sensiblement plane et est maintenu dans une position sensiblement horizontale par un circuit fermé de transport.

6. Dispositif selon l'une des revendications 1 à 5, **caractérisé en ce que** le support d'emballage (2) comporte sur deux côtés diamétralement opposés (33, 34) des évidements (35) en forme de U qui sont ouverts vers l'extérieur et qui sont orientés parallèlement au premier sens de transport (8).

7. Dispositif selon la revendication 6, **caractérisé en ce que** le support d'emballage (2) a la forme d'une baguette allongée s'étendant transversalement à la première direction de transport (8) de telle sorte que les évidements (35) viennent se placer par paire les uns à côté des autres.

8. Dispositif selon l'une des revendications 1 à 7, **caractérisé en ce que** le support d'emballage (2) destiné à supporter des emballages (1) en forme de bouteille est une tôle en forme de baguette comportant des paires d'évidements (35) en forme de U qui sont opposés l'un à l'autre, lesdites paires étant disposées les unes à côté des autres transversalement au premier sens de transport (8) et la largeur (B) des évidements correspondant sensiblement au diamètre extérieur (D) du col (36) de l'emballage (1) en forme de bouteille.

9. Dispositif selon l'une des revendications 1 à 8, **caractérisé par** des moyens d'amenée d'azote gazeux stérile dans l'emballage correspondant (1) de façon que l'azote remplisse à peu près tout le volume de l'emballage (1), de préférence avant de remplir l'emballage (1) avec le produit alimentaire liquide.
